# EUROPEAN PATENT APPLICATION

(11) **EP 4 597 646 A1**
(43) Date of publication of application: **06.08.2025**
(21) Application number: 23871329.1
(22) Date of filing: 22.06.2023
(51) Int. Cl.: H01M 8/023, H01M 4/86, H01M 8/0232, H01M 8/0236, H01M 8/0247, H01M 8/12

(54) **CONDUCTIVE MEMBER, AND SOLID OXIDE FUEL CELL CONTAINING SAME**

(30) Priority: 28.09.2022 JP 2022155328
(71) Applicant: SUMITOMO ELECTRIC INDUSTRIES, LTD., Osaka-shi, Osaka 541-0041 (JP)
(72) Inventor: NUMATA, Koma, Osaka-shi, Osaka 541-0041 (JP); HOSOE, Akihisa, Osaka-shi, Osaka 541-0041 (JP)
(74) Representative: Boult Wade Tennant LLP
(86) International application number: PCT/JP2023/023102
(87) International publication number: WO 2024/070084

(57) **Abstract**

A conductive member includes a porous body having a framework having a three-dimensional mesh structure, wherein the porous body has a plate shape having a first main surface and a second main surface opposite to the first main surface, and the first main surface contains a carbon atom.

## Description

### TECHNICAL FIELD

The present disclosure relates to a conductive member and a solid oxide fuel cell including the same. The present application claims priority based on Japanese Patent Application No. 2022-155328 filed on September 28, 2022. The entire contents of the Japanese Patent Application are incorporated herein by reference.

### BACKGROUND ART

Conventionally, a conductive member including a porous body containing nickel, cobalt, and the like has been used in a solid oxide fuel cell (PTL 1).

### CITATION LIST

### PATENT LITERATURE

PTL 1: Japanese National Patent Publication No. 2017-507452

### SUMMARY OF INVENTION

A conductive member according to one embodiment of the present disclosure is a conductive member including a porous body having a framework having a three-dimensional mesh structure, wherein
the porous body has a plate shape having a first main surface and a second main surface opposite to the first main surface, and
the first main surface contains a carbon atom.

A solid oxide fuel cell according to one embodiment of the present disclosure includes the conductive member.

### BRIEF DESCRIPTION OF DRAWINGS

Fig. 1 is a schematic cross sectional view showing an exemplary conductive member according to one embodiment of the present disclosure.
Fig. 2 is a schematic enlarged view of a region II in Fig. 1.
Fig. 3 is a schematic enlarged view of a region III in Fig. 2.
Fig. 4 is a schematic enlarged view of a region IV in Fig. 1.
Fig. 5 is a schematic cross sectional view showing an exemplary solid oxide fuel cell of the embodiment.
Fig. 6 is a schematic diagram showing a method of measuring a value of contact resistance.

### DETAILED DESCRIPTION

### [Problem to be Solved by the Present Disclosure]

When a conductive member including a porous body containing a metal such as nickel and cobalt is used in a solid oxide fuel cell, oxidation of the metal proceeds due to use, thereby forming an oxide at a surface-side region of the conductive member. Since the surface of the conductive member is in contact with a connection member (interconnector) in the solid oxide fuel cell, contact resistance between the conductive member and the connection member (interconnector) becomes high due to the generation of the oxide, with the result that output may be decreased. Therefore, it has been required to provide: a conductive member allowing for suppression of increased contact resistance due to use of a solid oxide fuel cell when used in the solid oxide fuel cell; and a solid oxide fuel cell having excellent output performance with the output performance being suppressed from being decreased.

Therefore, an object of the present disclosure is to provide: a conductive member allowing for suppression of increased contact resistance due to use of a solid oxide fuel cell when used in the solid oxide fuel cell; and a solid oxide fuel cell having excellent output performance with the output performance being suppressed from being decreased.

### [Advantageous Effect of the Present Disclosure]

According to the present disclosure, it is possible to provide: a conductive member allowing for suppression of increased contact resistance due to use of a solid oxide fuel cell when used in the solid oxide fuel cell; and a solid oxide fuel cell having excellent output performance with the output performance being suppressed from being decreased.

### [Description of Embodiments]

First, embodiments of the present disclosure will be listed and described.
[1] A conductive member according to one embodiment of the present disclosure is a conductive member including a porous body having a framework having a three-dimensional mesh structure, wherein
   the porous body has a plate shape having a first main surface and a second main surface opposite to the first main surface, and
   the first main surface contains a carbon atom.
      When the conductive member according to one embodiment of the present disclosure is used in a solid oxide fuel cell, increased contact resistance due to use of the solid oxide fuel cell is suppressed. Therefore, in the solid oxide fuel cell including the conductive member, output performance is suppressed from being decreased, with the result that the solid oxide fuel cell can have excellent output performance.
[2] Preferably, in [1], the framework has a first region,
   the first region is a region within a distance of 10 nm from a surface of the framework exposed on the first main surface side, and
   a carbon atom content ratio C1 in the first region is 10 atm% or more and 90 atm% or less. Thus, the contact resistance can be further suppressed to be low when used in the solid oxide fuel cell. Therefore, in the solid oxide fuel cell including the conductive member, the output performance is further suppressed from being decreased, with the result that the solid oxide fuel cell can have more excellent output performance.
[3] Preferably, in [2], an oxygen atom content ratio C2 in the first region is 1 atm% or more and 10 atm% or less. Thus, the contact resistance can be further suppressed to be low when used in the solid oxide fuel cell. Therefore, in the solid oxide fuel cell including the conductive member, the output performance is further suppressed from being decreased, with the result that the solid oxide fuel cell can have more excellent output performance.
[4] Preferably, in [3], in the first region, a ratio C1/C2 of the carbon atom content ratio C1 to the oxygen atom content ratio C2 is 1 or more and 20 or less. Thus, when used in the solid oxide fuel cell, the surface of the first main surface becomes appropriately hard to improve a contact property with an adjacent member, thereby further suppressing the contact resistance from being increased due to the use of the solid oxide fuel cell. Therefore, in the solid oxide fuel cell including the conductive member, the output performance is further suppressed from being decreased, with the result that the solid oxide fuel cell can have more excellent output performance.
[5] Preferably, in [1], the porous body is a metal porous body. Thus, when used in the solid oxide fuel cell, increased contact resistance due to use of the solid oxide fuel cell is further suppressed. Therefore, in the solid oxide fuel cell including the conductive member, the output performance is further suppressed from being decreased, with the result that the solid oxide fuel cell can have more excellent output performance.
[6] Preferably, in [5], the metal porous body is a nickel cobalt metal porous body. Thus, when used in the solid oxide fuel cell, increased contact resistance due to use of the solid oxide fuel cell is further suppressed. Therefore, in the solid oxide fuel cell including the conductive member, the output performance is further suppressed from being decreased, with the result that the solid oxide fuel cell can have more excellent output performance.
[7] Preferably, in [1], the porous body is a metal oxide porous body. This embodiment means that the porous body is in an oxidized state due to use; however, even in such a state, the porous body can maintain high conductivity under a high-temperature environment.
[8] Preferably, in [7], the metal oxide porous body is a nickel cobalt oxide porous body. This embodiment means that the porous body is in an oxidized state due to use; however, even in such a state, the porous body can maintain high conductivity under a high-temperature environment.
[9] Preferably, in [8], the porous body has a spinel structure. Thus, the porous body having the spinel structure exhibits high conductivity, and therefore can maintain high conductivity even when oxidized due to use in a high-temperature environment.
[10] A solid oxide fuel cell according to one embodiment of the present disclosure includes the conductive member according to [1] to [9]. Thus, the solid oxide fuel cell can have excellent output performance.

### [Details of Embodiments of the Present Disclosure]

Specific examples of the conductive member and the solid oxide fuel cell including the conductive member according to one embodiment (hereinafter, also referred to as the "present embodiment") of the present disclosure will be described below with reference to figures. In each of the figures of the present disclosure, the same reference characters represent the same or corresponding portions. Moreover, dimensional relations such as length, width, thickness, and depth are appropriately changed for clarity and simplification of the figures, and do not necessarily represent actual dimensional relations.

In the present specification, the expression "A to B" represents a range of lower to upper limits (i.e., A or more and B or less), and when no unit is indicated for A and a unit is indicated only for B, the unit of A is the same as the unit of B.

In the present specification, when a compound (alloy) or the like is expressed by a chemical formula in which a composition ratio of composition elements is not limited such as "NiCo", it is assumed that the chemical formula includes all the conventionally known composition ratios (element ratios). Further, the above-described chemical formula includes not only a stoichiometric composition but also a non-stoichiometric composition. For example, the chemical formula "NiCo" includes not only a stoichiometric composition "Ni₁Co₁" but also a non-stoichiometric composition such as "Ni₁Co_{0.8}". The same also applies to compounds other than the "NiCo".

### [First Embodiment: Conductive Member]

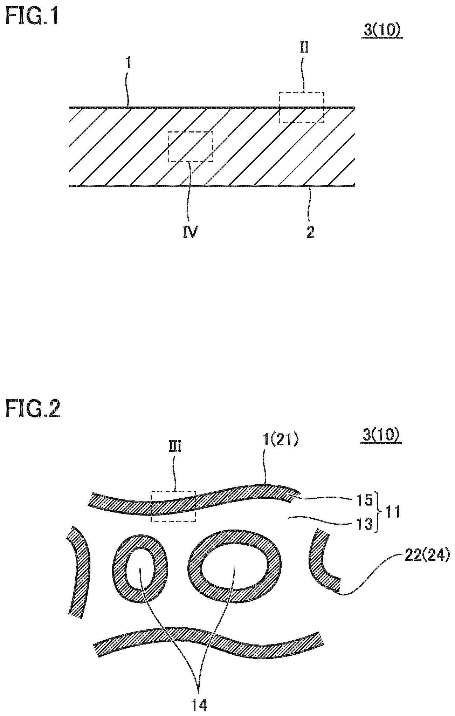

A conductive member according to one embodiment of the present disclosure will be described with reference to Figs. 1 to 4.

A conductive member 3 according to one embodiment (hereinafter, also referred to as "the present embodiment") of the present disclosure is a conductive member 3 including a porous body 10 having a framework 11 having a three-dimensional mesh structure, wherein
porous body 10 has a plate shape having a first main surface 1 and a second main surface 2 opposite to first main surface 1, and
first main surface 1 contains a carbon atom.

### <<Porous Body>>

### <Shape of Porous Body>

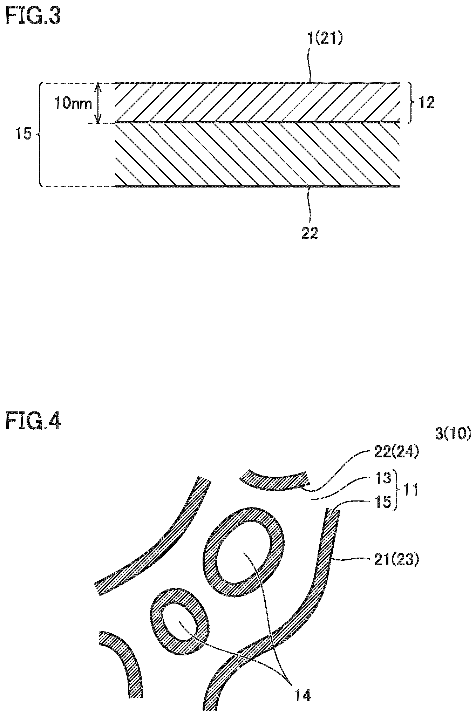

Conductive member 3 of the present disclosure includes porous body 10 having framework 11 having the three-dimensional mesh structure. In the present disclosure, the three-dimensional mesh structure can mean the same structure as the structure described in paragraphs [0047] to [0054] of the specification of WO 2019/244480. In the present disclosure, framework 11 can have the same structure as the structure described in paragraphs [0034] to [0036] of the specification of WO 2019/244480. For example, as shown in Figs. 2 and 4, porous body 10 has a three-dimensional mesh structure having framework 11 and pore portions 14. Framework 11 consists of a framework main body 15 and an inner portion 13 that is hollow and that is surrounded by framework main body 15. Conductive member 3 of the present disclosure can consist of porous body 10 having framework 11 having the three-dimensional mesh structure.

Preferably, in framework 11, inner portion 13 surrounded by framework main body 15 has a portion having a hollow tubular shape, and a cross section of the tubular shape perpendicular to the extending direction thereof has a triangular shape, another polygonal shape, or a circular shape. Since framework 11 has such a tubular shape, framework main body 15 has an inner wall 24 that forms an inner side surface 22 of the tube and an outer wall 23 that forms an outer side surface 21 of the tube (Figs. 2 and 4). Since inner portion 13 surrounded by framework main body 15 is hollow in framework 11, porous body 10 can have a very light weight (i.e., conductive member 3 can have a very light weight). It should be noted that framework 11 is not limited to being hollow, and may be solid. In this case, strength of conductive member 3 can be improved.

Porous body 10 has a plate shape having first main surface 1 and second main surface 2 opposite to first main surface 1. The thickness of porous body 10 is preferably 0.2 mm or more and 2 mm or less. Since the thickness of porous body 10 is 2 mm or less, porous body 10 having a thickness smaller than that of a conventional one can be formed, thereby reducing a necessary amount of metal. Since the thickness of porous body 10 is 0.2 mm or more, necessary strength can be provided. The thickness of porous body 10 is more preferably 0.5 mm or more and 1 mm or less. The thickness of porous body 10 can be measured by, for example, a commercially available digital thickness gauge (Teclock).

### <Composition of Porous Body>

First main surface 1 contains a carbon atom. Thus, conductivity is imparted to first main surface 1, with the result that when first main surface 1 and a connection member (interconnector) are in contact with each other in a solid oxide fuel cell, contact resistance between conductive member 3 and the connection member can be suppressed from being increased due to generation of an oxide (nickel oxide, cobalt oxide, an oxide of nickel cobalt, or the like). Here, the expression "first main surface 1 contains a carbon atom" can be interpreted as "at least a part of the carbon atom exists to be exposed at first main surface 1".

The carbon atom preferably exists as a conductive carbon particle. Thus, the conductivity of first main surface 1 can be improved, thereby further suppressing increased contact resistance between conductive member 3 and the connection member in the solid oxide fuel cell. Examples of the conductive carbon particle include a carbon black (thermal black, furnace black, lamp black, channel black, acetylene black, or the like) particle.

The following method can be used to specify that "first main surface 1 contains a carbon atom". First, in a rectangular measurement region of 1 µm × 1 µm at any one location on first main surface 1, surface analysis is performed onto the outer surface of framework 11 by using an Auger electron spectrometer (Auger electron spectroscopy), which has a trade name "PHI 650" and is provided by Perkin-Elmer. The surface analysis is performed in accordance with JIS K 0146:2002 (ISO 14606:2000) under the following conditions.

### <Measurement Conditions>

Electron energy: 10 kV
Electron beam current: 3 mA
Incident angle with respect to first main surface 1: 90°
(Detector: 55°)
Beam diameter: 1 nm
Measurement region: 1 µm × 1 µm
Mode: surface analysis
Elements to be measured: metal components such as nickel, cobalt, iron, copper, manganese, chromium and tin, oxygen, and carbon

The same analysis is performed onto each of any other nine locations on first main surface 1. When a carbon atom is detected at at least one of the ten locations in total, it can be specified that "first main surface 1 contains a carbon atom". It should be noted that as long as the measurement is performed for the same conductive member 3 by the above-described method, it is confirmed that there is no variation in measurement result even when a measurement location is freely changed.

It should be noted that the expression "first main surface 1 contains a carbon atom" means that at least first main surface 1 contains a carbon atom. That is, as long as "first main surface 1 contains a carbon atom", second main surface 2 may or may not contain a carbon atom. It can be specified that "second main surface 2 contains a carbon atom", by the same method as the method of specifying that "first main surface 1 contains a carbon atom" except that measurement is performed onto "second main surface 2".

As long as "first main surface 1 contains a carbon atom", the surface (outer side surface 21) of framework 11 in a region sandwiched between first main surface 1 and second main surface 2 may or may not contain a carbon atom.

### <First Region>

Framework 11 has a first region 12, and first region 12 can be a region within a distance of 10 nm from a surface of framework 11 exposed on the first main surface 1 side (Fig. 3). It should be noted that here, the "surface of framework 11 exposed on the first main surface 1 side" means a surface that can be viewed from the first main surface 1 side in "framework 11 exposed on the first main surface 1 side".

### (Composition of First Region)

A carbon atom content ratio C1 in first region 12 is preferably 10 atm% or more and 90 atm% or less. Thus, when first main surface 1 and the connection member are in contact with each other, contact resistance between conductive member 3 and the contact member can be further suppressed to be low. The lower limit of C1 is preferably 20 atm% or more, is more preferably 25 atm% or more, and is further preferably 30 atm% or more. The upper limit of C1 is preferably 80 atm% or less, is more preferably 70 atm% or less, and is further preferably 60 atm% or less. C1 is preferably 20 atm% or more and 80 atm% or less, is more preferably 25 atm% or more and 70 atm% or less, and is further preferably 30 atm% or more and 60 atm% or less.

An oxygen atom content ratio C2 in first region 12 is preferably 1 atm% or more and 10 atm% or less. Thus, since the first main surface 1 side of conductive member 3 becomes hard, conductive member 3 and the connection member are strongly pressed against each other to increase a contact area when stacking conductive member 3 and the connection member, thereby attaining a small contact resistance. The lower limit of C2 is preferably 2 atm% or more, is more preferably 3 atm% or more, and is further preferably 4 atm% or more. The upper limit of C2 is preferably 9 atm% or less, is more preferably 8 atm% or less, and is further preferably 7 atm% or less. C2 is preferably 2 atm% or more and 9 atm% or less, is more preferably 3 atm% or more and 8 atm% or less, and is further preferably 4 atm% or more and 7 atm% or less.

In conductive member 3, each of C1 and C2 is measured, by using an Auger electron spectrometer, at each of points located at intervals of 1 nm from the surface of framework 11 as a starting point in the depth direction of framework 11 in the region within the distance of 10 nm from the surface of framework 11. That is, the measurement is performed at a total of 11 points located at respective distances of 0 nm, 1 nm, ..., 10 nm from the surface of framework 11. The measurement is performed in accordance with JIS K 0146:2002 (ISO 14606:2000) under the following conditions.

### <Measurement Conditions>

Electron energy: 10 kV
Electron beam current: 3 mA
Incident angle with respect to first main surface 1: 90°
(Detector: 55°)
Beam diameter: 1 nm
Measurement region: 1 µm × 1 µm
Sputtering ion: Ar
Mode: depth direction analysis (depth profile)
Elements to be measured: metal components such as nickel, cobalt, iron, copper, manganese, chromium and tin, oxygen, and carbon

By calculating the average value of the carbon atom content ratios with respect to the total of the carbon atoms, the metal atoms such as the nickel atoms, the cobalt atoms, the iron atoms, the copper atoms, the manganese atoms, the chromium atoms, and the tin atoms, and the oxygen atoms at the respective points and calculating the average value of the oxygen atom content ratios at the respective points, the average value of the carbon atom content ratios and the average value of the oxygen atom content ratios at any one location on the first main surface 1 in the depth direction are found. Further, the same analysis is performed at each of any other four locations on first main surface 1. C1 and C2 are found by calculating the average value of the carbon atom content ratios and the average value of the oxygen atom content ratios at the total of five locations.

As long as the measurement is performed for the same conductive member 3 by the above-described method, it is confirmed that there is no variation in measurement result even when a measurement region is freely changed.

In first region 12, a ratio C1/C2 of carbon atom content ratio C1 to oxygen atom content ratio C2 is preferably 1 or more and 20 or less. Thus, the contact resistance between conductive member 3 and the connection member is likely to be suppressed from being increased due to generation of an oxide, with the result that the solid oxide fuel cell including conductive member 3 of the present disclosure can have more excellent output performance. The lower limit of C1/C2 is preferably 1 or more, is more preferably 2 or more, and is further preferably 4 or more. The upper limit of C1/C2 is preferably 20 or less, is more preferably 15 or less, and is further preferably 10 or less. C1/C2 is preferably 2 or more and 20 or less, is more preferably 4 or more and 15 or less, and is further preferably 4 or more and 10 or less.

### <Types of Porous Body>

### (Metal Porous Body)

Porous body 10 is preferably a metal porous body. Thus, when used in the solid oxide fuel cell, increased contact resistance due to use of the solid oxide fuel cell is further suppressed. Therefore, in the solid oxide fuel cell including conductive member 3, the output performance is further suppressed from being decreased, with the result that the solid oxide fuel cell can have more excellent output performance. Here, the metal porous body means a porous body 10 in which the main body of framework 11 contains metal element(s) as a main component. Here, the expression "the main body of framework 11 contains metal element(s) as a main component" means that the total content of the metal element(s) is more than 50 mass% in the main body of framework 11. It should be noted that it is specified that "the total content of the metal element(s) is more than 50 mass% in the main body of framework 11", by adding up "the content ratio(s) of the metal element(s) in the main body of framework 11" as found by a method described later.

The main body of framework 11 preferably contains 50 mass% or more, more preferably 60 mass% or more, and further preferably 65 mass% or more of the metal element(s) in total. The main body of framework 11 preferably contains 100 mass% or less, more preferably 99 mass% or less, and further preferably 98 mass% or less of the metal element(s) in total. The main body of framework 11 preferably contains 50 mass% or more and 100 mass% or less, more preferably 60 mass% or more and 99 mass% or less, and further preferably 65 mass% or more and 98 mass% or less of the metal element(s) in total.

The metal element(s) are not particularly limited, and examples thereof include nickel (Ni), cobalt (Co), aluminum (Al), copper (Cu), chromium (Cr), iron (Fe), manganese (Mn), and tin (Sn). The main body of framework 11 preferably contains at least one selected from a group consisting of nickel (Ni), cobalt (Co), aluminum (Al), copper (Cu), chromium (Cr), iron (Fe), manganese (Mn), and tin (Sn). The main body of framework 11 may contain one metal element as a simple substance of metal, or may contain two or more metal elements as an alloy. Examples of the alloy include a nickel cobalt alloy (NiCo alloy), a tin nickel alloy (SnNi alloy), a nickel chromium alloy (NiCr alloy), a nickel aluminum alloy (NiAl alloy), a nickel iron alloy (NiFe alloy), a nickel manganese alloy (NiMn alloy), a copper nickel alloy (CuNi alloy), and the like. Since the main body of framework 11 contains the simple substance of metal or the alloy, the metal porous body has conductivity.

From the viewpoint of improving the conductivity of porous body 10, the main body of framework 11 preferably contains nickel as a simple substance (i.e., contains nickel as a Ni metal), contains cobalt as a simple substance (i.e., contains cobalt as a Co metal), or contains nickel and cobalt as a NiCo alloy (in other words, contains the NiCo alloy), and more preferably contains the NiCo alloy. That is, the metal porous body is more preferably a nickel cobalt metal porous body.

As the nickel cobalt metal porous body, for example, the porous body described in WO 2019/244480 can be used. Details of the nickel cobalt metal porous body and a method of producing the nickel cobalt metal porous body are incorporated herein by reference to the description of WO 2019/244480. Therefore, in the present specification, the details of the nickel cobalt metal porous body and the method of producing the nickel cobalt metal porous body are not described.

### (Metal Oxide Porous Body)

Porous body 10 is preferably a metal oxide porous body. This embodiment means that porous body 10 is in an oxidized state due to use; however, even in such a state, porous body 10 can maintain high conductivity under a high-temperature environment. Here, the metal oxide porous body means a porous body 10 in which the main body of framework 11 contains oxide(s) of the metal element(s) as a main component. Here, the expression "the main body of framework 11 contains oxide(s) of the metal element(s) as a main component" means that the total content of the oxide(s) of the metal element(s) is more than 50 mass% in the main body of framework 11.

The main body of framework 11 preferably contains 50 mass% or more, more preferably 60 mass% or more, and further preferably 65 mass% or more of the oxide(s) of the metal element(s) in total. The main body of framework 11 preferably contains 100 mass% or less, more preferably 99 mass% or less, and further preferably 98 mass% or less of the oxide(s) of the metal element(s) in total. The main body of framework 11 preferably contains 50 mass% or more and 100 mass% or less, more preferably 60 mass% or more and 99 mass% or less, and further preferably 65 mass% or more and 98 mass% or less of the oxide(s) of the metal element(s) in total.

The metal element(s) are not particularly limited, and examples thereof include nickel (Ni), cobalt (Co), aluminum (Al), copper (Cu), chromium (Cr), iron (Fe), manganese (Mn), and tin (Sn). The main body of framework 11 preferably contains an oxide of at least one metal element selected from a group consisting of nickel (Ni), cobalt (Co), aluminum (Al), copper (Cu), chromium (Cr), iron (Fe), manganese (Mn), and tin (Sn). The main body of framework 11 may contain one metal element as an oxide of a simple substance of metal, or may contain two or more metal elements as an oxide of an alloy. Examples of the oxide of the alloy include an oxide of a nickel cobalt alloy (NiCo alloy), an oxide of a tin nickel alloy (SnNi alloy), an oxide of a nickel chromium alloy (NiCr alloy), an oxide of a nickel aluminum alloy (NiAl alloy), a nickel iron alloy (NiFe alloy), a nickel manganese alloy (NiMn alloy), a copper nickel alloy (CuNi alloy), and the like. As the oxide of the nickel cobalt alloy (NiCo alloy) among the oxides of the alloys, specifically, an oxide represented by the chemical formula of NiₓCo₃₋ₓO₄ (where 0.6≤x≤1.2 or 1.8≤x≤2.4), typically, an oxide represented by NiCo₂O₄ or Ni₂CoO₄ is generated in porous body 10 by oxidation. With the oxidation of porous body 10, an oxide of a metal element represented by the chemical formula of CoCo₂O₄ may be generated. The oxides of the metal elements represented by these chemical formulas are known as oxides that each have high conductivity and that are of the same type as an oxide (for example, LiMn₂O₄) commonly used as an electrode material of a secondary battery or the like, for example. In view of the above, it is considered that porous body 10 can maintain high conductivity even when oxidized due to use in a high-temperature environment.

From the viewpoint of improving the conductivity of porous body 10, the main body of framework 11 preferably contains nickel as an oxide of simple substance (i.e., contains nickel oxide), contains cobalt as an oxide of simple substance (i.e., contains cobalt oxide), or contains nickel and cobalt as an oxide of a NiCo alloy (in other words, contains the oxide of the NiCo alloy), and more preferably contains the oxide of the NiCo alloy. That is, the metal oxide porous body is more preferably a nickel cobalt oxide porous body.

As the nickel cobalt oxide porous body, for example, the porous body described in WO 2019/244480 can be used. Details of the nickel cobalt oxide porous body and a method of producing the nickel cobalt oxide porous body are incorporated herein by reference to the description of WO 2019/244480. Therefore, in the present specification, the details of the nickel cobalt oxide porous body and the method of producing the nickel cobalt oxide porous body are not described.

The content ratios of each metal element and oxygen in the main body of framework 11 can be found by the following procedure. First, an extending portion of framework 11 is specified, and an observation image of a cross section of framework 11 perpendicular to the extending direction of framework 11 by a scanning electron microscope (SEM) is obtained. The image is then analyzed using an EDX (Energy Dispersive X-ray spectrometry) device accompanied with the SEM. As the SEM, for example, the trade name "SUPRA35VP" provided by Carl Zeiss Microscopy is used. As the EDX device, for example, the trade name "octane super" provided by AMETEK is used. Based on the atomic concentrations of the elements detected by the EDX device, it is possible to find mass%, mass ratio, and the like of oxygen and each metal element in framework main body 15.

As long as the measurement is performed for the same framework 11 by the above-described method, it has been confirmed that there is no variation in measurement result even when a measurement region is freely changed.

The main body of framework 11 can contain other element(s) as constituent element(s) as long as the functions and effects of conductive member 3 of the present disclosure are not affected. The main body of framework 11 may contain, as the other element(s), silicon, magnesium, carbon, sodium, iron, tungsten, titanium, phosphorus, boron, silver, gold, molybdenum, nitrogen, sulfur, fluorine, chlorine, and/or the like. Each of these components may be contained as an inevitable impurity that is inevitably introduced in a below-described production method, for example. The content ratio of each of the other element(s) in framework 11 is preferably 5 mass% or less, and the content ratio of the total of the other element(s) in framework 11 is preferably 1 mass% or less. The content ratio of each of the other element(s) in the main body of framework 11 can be measured by the same method as the method of measuring each of the content ratio(s) of the other element(s) in the main body of framework 11.

As long as the measurement is performed for the same framework 11 by the above-described method, it has been confirmed that there is no variation in measurement result even when a measurement region is freely changed.

The quantity per unit area, porosity, pore diameter, and average thickness of framework main body 15 of porous body 10 are incorporated herein by reference to the description of WO 2019/244480. Therefore, in the present specification, details of the nickel cobalt metal porous body and a method of producing the nickel cobalt metal porous body are not described. It should be noted that the composition of framework main body 15 is not limited to the composition described in WO 2019/244480 as incorporated herein. For all the compositions of framework main body 15 used in the present disclosure, the description of WO 2019/244480 is incorporated herein.

### <Crystal Structure of Porous Body>

Porous body 10 preferably has a spinel structure. Thus, porous body 10 having the spinel structure exhibits high conductivity, and porous body 10 can therefore maintain the high conductivity even when oxidized due to use in a high-temperature environment. Porous body 10 can be specified to have the spinel structure in the following manner: an extending portion of framework 11 is specified, an X-ray is applied to a cross section of framework 11 perpendicular to the extending direction of framework 11, and an X-ray diffraction (XRD) method is used to analyze a diffraction pattern thereof.

An X-ray diffractometer (for example, the trade name (model number): "Empyrean" provided by Spectris; analysis software: "Integrated Powder X-Ray Analysis Software PDXL") can be used as a measurement device for specifying that framework 11 has the spinel structure, for example. Measurement conditions are as follows.

### (Measurement Conditions)

X-ray diffraction method: θ-2θ method
Measurement system: parallel beam optical system mirror
Scanning range (2θ) : 10 to 90°
Integration time: 1 second/step
Step: 0.03°

### <<Method of Producing Conductive Member>>

The conductive member according to the present embodiment can be produced, for example, by the following method. That is, the conductive member can be produced by a method of producing a conductive member including the following steps in the following order:
a first step of preparing a porous body having a plate shape and a conductive paste in which conductive carbon particles are dispersed in a solvent;
a second step of obtaining a conductive member precursor by bringing the conductive paste into contact with the porous body; and
a third step of obtaining a conductive member by performing heat treatment onto the conductive member precursor. Moreover, the method may further include a fourth step of performing oxidation treatment onto a surface of the conductive member. It should be noted that the first step includes: a first A step of preparing the porous body having the plate shape; and a first B step of preparing the conductive paste in which the conductive carbon particles are dispersed in the solvent.

### <First Step>

### (First A Step)

In the first A step, a first porous body is prepared as the porous body having the plate shape. As the first porous body, a commercially available porous body can be used. Alternatively, the first porous body can be produced by the same method as the method described in WO 2019/244480.

### (First B Step)

In the first B step, the conductive paste in which the conductive carbon particles are dispersed in the solvent is prepared. The conductive carbon particles are a source material for carbon atoms to be included in the first main surface of the conductive member. Examples of the conductive carbon particles include carbon black (thermal black, furnace black, lamp black, channel black, acetylene black, and the like). Examples of the solvent include water, ethanol, methanol, and the like. In the conductive paste, 5 parts by mass or more and 40 parts by mass or less of the conductive carbon particles can be provided with respect to 100 parts by mass of the solvent. It should be noted that in the conductive paste, the parts by mass of the conductive carbon particles can be appropriately adjusted such that carbon atom content ratio C1 in the first region falls within the desired numerical range. In particular, since it is difficult to adjust the thickness of the applied conductive paste when the below-described second B step is performed in the second step described later, carbon atom content ratio C1 in the first region can be adjusted by appropriately adjusting the parts by mass of the conductive carbon particles in the conductive paste.

### <Second Step>

Next, in the second step, the conductive member precursor is obtained by bringing the conductive paste into contact with the first porous body. Specifically, for example, the conductive member precursor can be obtained by performing any one of the following second A step and second B step.

### (Second A Step)

A conductive paste is applied to at least one surface of the first porous body. Then, the solvent is volatilized from the conductive paste. In this way, the conductive member precursor is obtained in which the conductive carbon particles are held at at least one surface of the porous body. Further, the conductive paste may be applied to both surfaces of the first porous body. It should be noted that the thickness of the applied conductive paste can be appropriately adjusted such that carbon atom content ratio C1 in the first region falls within a desired numerical range. It should be noted that when the conductive paste is applied to only one surface of the first porous body, the surface of the first porous body at which the conductive carbon particles are held corresponds to the first main surface of the porous body.

### (Second B Step)

The whole of the first porous body is immersed in the conductive paste so as to introduce the conductive paste into the pores of the first porous body. Then, the solvent is volatilized from the conductive paste. In this way, the conductive member precursor is obtained in which the conductive carbon particles are held at the outer surface of the framework of the porous body.

### <Third Step>

Next, heat treatment is performed onto the conductive member precursor to obtain the conductive member. In the heat treatment, the temperature can be, for example, 600°C to 800°C. Thus, the conductive carbon particles in the conductive paste are adhered to the porous body. In the heat treatment, the atmosphere can be, for example, a nitrogen atmosphere. The time of the heat treatment can be, for example, 10 minutes to 2 hours. The atmosphere of the heat treatment and the time of the heat treatment affect an amount of the conductive carbon particles to be adhered to the porous body.

### <Fourth Step>

Further, the oxidation treatment may be performed by introducing oxygen into the surface of the porous body in the conductive member. Specifically, the oxidation treatment can be performed by performing heat treatment in an air atmosphere. Thus, the condition "oxygen atom content ratio C2 in the first region is 1 atm% or more and 10 atm% or less" is likely to be satisfied in the conductive member of the present disclosure. As a result, since the first main surface side of the conductive member becomes hard, the conductive member and the connection member are strongly pressed against each other to increase the contact area when stacking the conductive member and the connection member, thereby attaining a small contact resistance. It should be noted that in the oxidation treatment, the temperature can be, for example, 100°C or more and 200°C or less. In the oxidation treatment, the atmosphere can be, for example, an air atmosphere. In the heat treatment, the time can be 10 minutes or more and 2 hours or less, for example. As a result of diligent study by the present inventors, it has been newly found that the conductive member of the present disclosure is likely to satisfy the condition "oxygen atom content ratio C2 in the first region is 1 atm% or more and 10 atm% or less" by performing the fourth step.

By performing the above steps, the conductive member according to the first embodiment can be produced. That is, conductive member 3 is a conductive member 3 including a porous body 10 having a framework 11 having a three-dimensional mesh structure, wherein porous body 10 has a plate shape having a first main surface 1 and a second main surface 2 opposite to first main surface 1, and first main surface 1 contains a carbon atom.

### [Second Embodiment: Solid Oxide Fuel Cell Including Conductive Member]

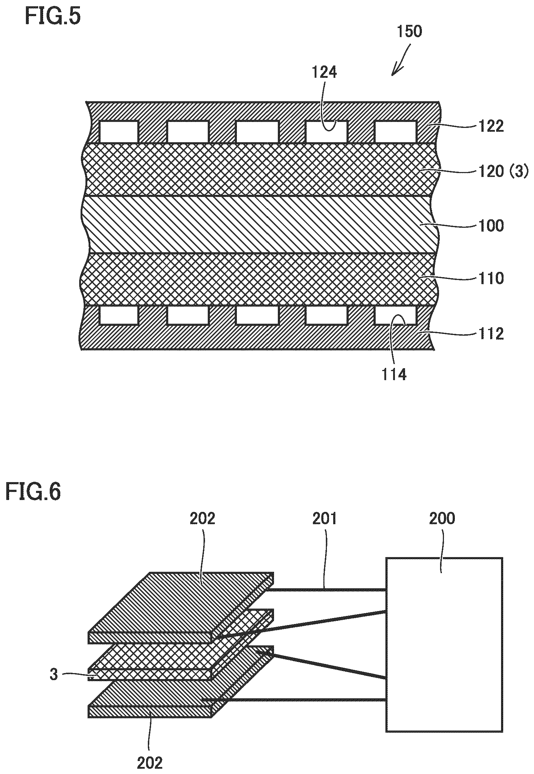

A solid oxide fuel cell according to one embodiment of the present disclosure will be described with reference to Fig. 5. Fig. 5 is a schematic cross sectional view showing a solid oxide fuel cell 150 according to one embodiment of the present disclosure. In Fig. 5, solid oxide fuel cell 150 includes a conductive member 110 for hydrogen electrode, a conductive member 120 for air electrode, and a cell 100 for fuel cell. Cell 100 for fuel cell is provided between conductive member 110 for hydrogen electrode and conductive member 120 for air electrode. Here, "conductive member 110 for hydrogen electrode" means a conductive member on the side of supplying hydrogen in the fuel cell. "Conductive member 120 for air electrode" means a conductive member on the side of supplying a gas (for example, air) containing oxygen in the fuel cell. In solid oxide fuel cell 150 of the present embodiment, conductive member 120 for air electrode consists of conductive member 3 of the first embodiment. That is, solid oxide fuel cell 150 of the present embodiment includes conductive member 3 according to the first embodiment. Thus, the contact resistance between the conductive member and the contact member can be suppressed from being increased due to use, with the result that solid oxide fuel cell 150 having excellent output performance can be provided.

Cell 100 for fuel cell can include: an air electrode; a hydrogen electrode; an electrolyte layer provided between the air electrode and the hydrogen electrode; and an intermediate layer provided between the electrolyte layer and the air electrode to prevent reaction therebetween (all not shown). As the air electrode, for example, an oxide of LaSrCo (LSC) is used. As the electrolyte layer, for example, an oxide of Zr doped with Y (YSZ) is used. As the intermediate layer, for example, an oxide of Ce doped with Gd (GDC) is used. As the hydrogen electrode, for example, a mixture of YSZ and NiO₂ is used.

In Fig. 5, solid oxide fuel cell 150 further includes a first interconnector 112 having a fuel flow channel 114 and a second interconnector 122 having an oxidant flow channel 124. Fuel flow channel 114 is a flow channel for supplying fuel (for example, hydrogen) to the hydrogen electrode. Fuel flow channel 114 is provided in a main surface of first interconnector 112 facing conductive member 110 for hydrogen electrode. Oxidant flow channel 124 is a flow channel for supplying an oxidant (for example, oxygen) to the air electrode. Oxidant flow channel 124 is provided in a main surface of second interconnector 122 facing conductive member 120 for air electrode.

### <<Method of Producing Solid Oxide Fuel Cell Including Conductive Member>>

Solid oxide fuel cell 150 including conductive member 3 according to the present embodiment can be produced by appropriately using a known method, except that conductive member 3 according to the first embodiment is used as conductive member 120 for air electrode. Therefore, a method of producing solid oxide fuel cell 150 including conductive member 3 should not be particularly limited except that conductive member 3 according to the first embodiment is used.

### Examples

Hereinafter, the present disclosure will be specifically described based on examples, but the present invention is not limited to the following examples.

### [Example 1]

### <<Production of Conductive Member>>

In an Example 1, each of porous bodies of samples No. 1-1 to 1-11 was produced as follows.

### <First Step>

A first porous body having a plate shape and composed of NiCo was produced and prepared by the method described in paragraphs [0086] to [0092] of WO 2019/244480 (first A step). Moreover, a conductive paste was prepared by dispersing acetylene black (conductive carbon particles), which served as a source material containing carbon atoms, by the parts by mass described in Table 1 with respect to 100 parts by mass of distilled water (solvent) (first B step). It should be noted that it is described that the distilled water (solvent) was "100 parts by mass" and carbon black was "0 parts by mass" in sample No. 1-1 and this means that distilled water (solvent) containing no carbon black was used.

### <Second Step>

The conductive paste was applied to the first main surface of the first porous body with the thickness of the applied conductive paste being adjusted such that carbon atom content ratio C1 in the first region became the value shown in Table 1. Next, the conductive paste applied to the first main surface was vacuum-dried at 110°C, thereby volatilizing the distilled water (solvent) from the conductive paste. In this way, a conductive member precursor was obtained in which the acetylene black (conductive carbon particles) was held at the first main surface of the first porous body.

### <Third Step>

Next, the conductive member precursor was subjected to heat treatment under the conditions described in Table 1 so as to obtain a conductive member.

### [Table 1]

**Table 1**

| Sample No. | | 1-1 | 1-2 | 1-3 | 1-4 | 1-5 | 1-6 | 1-7 | 1-8 | 1-9 | 1-10 | 1-11 |
|---|---|---|---|---|---|---|---|---|---|---|---|---|
| First Step | Distilled Water [Parts by Mass] | 100 | 100 | 100 | 100 | 100 | 100 | 100 | 100 | 100 | 100 | 100 |
| | Carbon Black [Parts by Mass] | 0 | 5 | 6 | 7 | 10 | 15 | 20 | 25 | 30 | 35 | 40 |
| Third Step | Temperature [°C] | - | 800 | 700 | 600 | 600 | 600 | 600 | 600 | 600 | 600 | 600 |
| | Atmosphere | - | Nitrogen | Nitrogen | Nitrogen | Nitrogen | Nitrogen | Nitrogen | Nitrogen | Nitrogen | Nitrogen | Nitrogen |
| | Time [Min.] | - | 60 | 30 | 10 | 10 | 10 | 10 | 10 | 10 | 10 | 10 |
| Before Use | Metal Porous Body | NiCo | NiCo | NiCo | NiCo | NiCo | NiCo | NiCo | NiCo | NiCo | NiCo | NiCo |
| | Presence or Absence of Carbon Atom | Absent | Present | Present | Present | Present | Present | Present | Present | Present | Present | Present |
| | C1 [atm%] | 0 | 0.1 | 0.2 | 0.5 | 1 | 2 | 5 | 10 | 20 | 50 | 90 |
| | C2 [atm%] | 0 | 0 | 0 | 0 | 0 | 0 | 0 | 0 | 0 | 0 | 0 |
| After Use | Presence or Absence of Spinel Structure | Present | Present | Present | Present | Present | Present | Present | Present | Present | Present | Present |
| | Contact Resistance | E | D | D | D | C | C | C | B | B | B | B |

In this way, the conductive members of samples No. 1-1 to 1-11 were produced.

### <<Evaluation of Properties of Conductive Member>>

### <Presence or Absence of Carbon Atom in First Main Surface>

For each of the conductive members of samples No. 1-1 to 1-11, presence or absence of carbon atom in the first main surface was found by the method described in the first embodiment. Obtained results are shown in the column "Presence or Absence of Carbon Atom" in Table 1. It should be noted that "Present" in the "Presence or Absence of Carbon Atom" means that the first main surface contains a carbon atom, and "Absent" in the "Presence or Absence of Carbon Atom in First Main Surface" means that the first main surface does not contain a carbon atom.

### <Composition of First Region>

For each of the conductive members of samples No. 1-1 to 1-11, each of carbon atom content ratio C1 and oxygen atom content ratio C2 in the first region was found by the method described in the first embodiment. Obtained results are shown in the column "C1 [atm%]" and the column "C2 [atm%]" in Table 1.

### <Contact Resistance>

The contact resistance of each of the conductive members of samples No. 1-1 to 1-11 was evaluated by the following method.

Conductive member 3 was sandwiched from beside both the first main surface side and the second main surface side by two interconnector-simulated plates 202 connected to a resistance measurement device 200 (trademark: AC mΩ Meter 356E; provided by Tsuruga Electric Corporation) by platinum wires 201 for electric conduction (Fig. 6). Next, interconnector-simulated plates 202 and conductive member 3 were each increased in temperature to 800°C in a thermostatic oven, and the value of the contact resistance thereof was measured by a four-terminal method. Based on the obtained value of the contact resistance, whether the contact resistance was high or low was evaluated in accordance with below-described five evaluation criteria A to E. Here, a contact resistance of D or higher (in other words, any one of A to D) indicates that the contact resistance of the conductive member is significantly low and that the solid oxide fuel cell can be provided with significantly excellent output performance by the conductive member. Results are shown in the column "Contact Resistance" in Table 1.
A: the contact resistance is lower than the contact resistance of the conductive member of sample No. 1-1 by 15% or more and less than 20%.
B: the contact resistance is lower than the contact resistance of the conductive member of sample No. 1-1 by 10% or more and less than 15%.
C: the contact resistance is lower than the contact resistance of the conductive member of sample No. 1-1 by 5% or more and less than 10%.
D: the contact resistance is lower than the contact resistance of the conductive member of sample No. 1-1 by 1% or more and less than 5%.
E: reference.

Each of the conductive members of samples No. 1-2 to 1-11 corresponds to an example of the present disclosure. On the other hand, the conductive member of sample No. 1-1 corresponds to a comparative example. Each of the conductive members of samples No. 1-2 to 1-11 has a significantly lower contact resistance than that of the conductive member of sample No. 1-1. That is, the solid oxide fuel cell including each of the conductive members of samples No. 1-2 to 1-11 can have significantly more excellent output performance than that of the solid oxide fuel cell including the conductive member of sample No. 1-1.

In view of the above, it was found that the solid oxide fuel cell including each of the conductive members of samples No. 1-2 to 1-11 was excellent in output performance.

### <Presence or Absence of Spinel Structure in Porous Body>

Regarding each of the conductive members of samples No. 1-1 to 1-11 each used for the evaluation of the contact resistance, presence or absence of the spinel structure in the porous body was found by the method described in the first embodiment. Obtained results are shown in the column "Presence or Absence of Spinel Structure" in Table 1.

### <Total Content of Oxides of Metal Elements in Main Body of Framework>

Regarding each of the conductive members of samples No. 1-1 to 1-11 each used for the evaluation of the contact resistance, it was confirmed by the method described in the first embodiment that the total content of the oxides of the metal elements in the main body of the framework was more than 50 mass%. That is, regarding each of the conductive members of samples No. 1-1 to 1-11 each used for the evaluation of the contact resistance, it was confirmed that the porous body was a nickel cobalt oxide porous body (metal oxide porous body).

### [Example 2]

### <<Production of Conductive Member>>

In an Example 2, each of conductive members of samples No. 2-1 to 2-9 was produced as follows.

### <First Step>

A first porous body having a plate shape and composed of NiCo was produced and prepared by the method described in paragraphs [0086] to [0092] of WO 2019/244480 (first A step). Moreover, a conductive paste was prepared by dispersing acetylene black (conductive carbon particles), which served as a source material containing carbon atoms, by the parts by mass described in Table 2 with respect to 100 parts by mass of distilled water (solvent) (first B step).

### <Second Step>

The conductive paste was applied to the first main surface of the first porous body with the thickness of the applied conductive paste being adjusted such that C1 became the value shown in Table 2. Next, the conductive paste applied to the first main surface was vacuum-dried at 110°C, thereby volatilizing the distilled water (solvent) from the conductive paste. In this way, a conductive member precursor was obtained in which the acetylene black (conductive carbon particles) was held at the first main surface of the first porous body.

### <Third Step>

The conductive member precursor was subjected to heat treatment under the conditions described in Table 2 so as to obtain a conductive member.

### [Table 2]

**Table 2**

| Sample No. | | 2-1 | 2-2 | 2-3 | 2-4 | 2-5 | 2-6 | 2-7 | 2-8 | 2-9 |
|---|---|---|---|---|---|---|---|---|---|---|
| First Step | Distilled Water [Parts by Mass] | 100 | 100 | 100 | 100 | 100 | 100 | 100 | 100 | 500 |
| | Carbon Black [Parts by Mass] | 30 | 30 | 30 | 30 | 30 | 30 | 30 | 30 | 30 |
| Third Step | Temperature [°C] | 600 | 600 | 600 | 600 | 600 | 600 | 600 | 600 | 600 |
| | Atmosphere | Nitrogen | Nitrogen | Nitrogen | Nitrogen | Nitrogen | Nitrogen | Nitrogen | Nitrogen | Nitrogen |
| | Time [Min.] | 10 | 10 | 10 | 10 | 10 | 10 | 10 | 10 | 10 |
| Fourth Step | Temperature [°C] | - | 100 | 100 | 100 | 200 | 200 | 200 | 200 | 200 |
| | Atmosphere | - | Air | Air | Air | Air | Air | Air | Air | Air |
| | Time [Min.1 | - | 10 | 20 | 60 | 60 | 70 | 80 | 100 | 120 |
| Before Use | Metal Porous Body | NiCo | NiCo | NiCo | NiCo | NiCo | NiCo | NiCo | NiCo | NiCo |
| | Presence or Absence of Carbon Atom | Present | Present | Present | Present | Present | Present | Present | Present | Present |
| | C1 [atm%] | 20 | 20 | 20 | 20 | 20 | 20 | 20 | 20 | 20 |
| | C2 [atm%] | 0 | 0.1 | 0.2 | 0.4 | 1 | 2 | 5 | 10 | 20 |
| | C1/C2 | - | 200 | 100 | 40 | 20 | 10 | 4 | 2 | 0.4 |
| After Use | Presence or Absence of Spinel Structure | Present | Present | Present | Present | Present | Present | Present | Present | Present |
| | Contact Resistance | B | B | B | B | A | A | A | A | B |

### <Fourth Step>

Oxidation treatment was performed by performing heat treatment in air under the conditions described in Table 2 so as to introduce oxygen into the surface of the porous body in the conductive member.

In this way, each of conductive members of samples No. 2-1 to 2-9 was produced.

### <<Evaluation of Properties of Conductive Member>>

### <Presence or Absence of Carbon Atom in First Main Surface>

For each of the conductive members of samples No. 2-1 to 2-9, presence or absence of carbon atom in the first main surface was evaluated in the same manner as in Example 1. Obtained results are shown in the column "Presence or Absence of Carbon Atom" in Table 2.

### <Composition of First Region>

For each of the conductive members of samples No. 2-1 to 2-9, the composition of the first region was found by the same method as in Example 1. Obtained results are shown in the column "C1 [atm%]" in Table 2 and the column "C2 [atm%]" in Table 2.

### <Contact Resistance>

The contact resistance of each of the conductive members of samples No. 2-1 to 2-9 was evaluated in the same manner as in Example 1. Obtained results are shown in the column "Contact Resistance" in Table 2.

Each of the conductive members of samples No. 2-1 to 2-9 corresponds to an example of the present disclosure. Each of the conductive members of samples No. 2-1 to 2-9 has a significantly low contact resistance. That is, a solid oxide fuel cell including each of the conductive members of samples No. 2-1 to 2-9 can have significantly excellent output performance.

In view of the above, it was found that the solid oxide fuel cell including each of the conductive members of samples No. 2-1 to 2-9 was excellent in output performance.

### <Presence or Absence of Spinel Structure in Porous Body>

Regarding each of the conductive members of samples No. 2-1 to 2-9 each used for the evaluation of the contact resistance, presence or absence of the spinel structure in the porous body was found by the method described in the first embodiment. Obtained results are shown in the column "Presence or Absence of Spinel Structure" in Table 2.

### <Total Content of Oxides of Metal Elements in Main Body of Framework>

Regarding each of the conductive members of samples No. 2-1 to 2-9 each used for the evaluation of the contact resistance, it was confirmed by the method described in the first embodiment that the total content of the oxides of the metal elements in the main body of the framework was more than 50 mass%. That is, regarding each of the conductive members of samples No. 2-1 to 2-9 each used for the evaluation of the contact resistance, it was confirmed that the porous body was a nickel cobalt oxide porous body (metal oxide porous body).

Heretofore, the embodiments and examples of the present invention have been illustrated, but it has been initially expected to appropriately combine configurations of the embodiments and examples.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1 first main surface; 2 second main surface; 3 conductive member; 10 porous body; 11 framework; 12 first region; 13 inner portion; 14 pore portion; 15 framework main body; 21 outer side surface; 22 inner side surface; 23 outer wall; 24 inner wall; 100 cell for fuel cell; 110 conductive member for hydrogen electrode; 112 first interconnector; 114 fuel flow channel; 120 conductive member for air electrode; 122 second interconnector; 124 oxidant flow channel; 150 solid oxide fuel cell; 200 resistance measurement device; 201 platinum wire; 202 interconnector-simulated plate.

## Claims

1. A conductive member comprising a porous body having a framework having a three-dimensional mesh structure, wherein
the porous body has a plate shape having a first main surface and a second main surface opposite to the first main surface, and
the first main surface contains a carbon atom.

2. The conductive member according to claim 1, wherein
the framework has a first region,
the first region is a region within a distance of 10 nm from a surface of the framework exposed on the first main surface side, and
a carbon atom content ratio C1 in the first region is 10 atm% or more and 90 atm% or less.

3. The conductive member according to claim 2, wherein an oxygen atom content ratio C2 in the first region is 1 atm% or more and 10 atm% or less.

4. The conductive member according to claim 3, wherein in the first region, a ratio C1/C2 of the carbon atom content ratio C1 to the oxygen atom content ratio C2 is 1 or more and 20 or less.

5. The conductive member according to claim 1, wherein the porous body is a metal porous body.

6. The conductive member according to claim 5, wherein the metal porous body is a nickel cobalt metal porous body.

7. The conductive member according to claim 1, wherein the porous body is a metal oxide porous body.

8. The conductive member according to claim 7, wherein the metal oxide porous body is a nickel cobalt oxide porous body.

9. The conductive member according to claim 8, wherein the porous body has a spinel structure.

10. A solid oxide fuel cell comprising the conductive member according to any one of claims 1 to 9.
